Europäisches Patentamt

**European Patent Office**

**Office européen des brevets**

(19)

(11) Publication number : **0 138 971**
**B1**

(12) **EUROPEAN PATENT SPECIFICATION**

(45) Date of publication of patent specification :
09.09.87

(51) Int. Cl.⁴ : **B 65 G 25/00**

(21) Application number : **84901540.9**

(22) Date of filing : **22.03.84**

(86) International application number :
**PCT/US 84/00437**

(87) International publication number :
**WO/8403686 (27.09.84 Gazette 84/23)**

(54) **REDUCED SIZE DRIVE/FRAME ASSEMBLY FOR A RECIPROCATING FLOOR CONVEYOR.**

(30) Priority : **22.03.83 US 477767**

(43) Date of publication of application :
**02.05.85 Bulletin 85/18**

(45) Publication of the grant of the patent :
**09.09.87 Bulletin 87/37**

(84) Designated contracting states :
**AT BE CH DE FR GB LI LU NL SE**

(56) References cited :
**EP-A- 0 085 734**
**EP-A- 0 085 736**
**FR-A-    984 776**
**US-A- 3 525 446**
**US-A- 3 534 875**
**US-A- 4 143 760**
**US-A- 4 144 963**
**US-A- 4 184 587**

(73) Proprietor : **Foster, Raymond Keith**
**P.O. Box 1**
**Madras Oregon 97741 (US)**

(72) Inventor : **Foster, Raymond Keith**
**P.O. Box 1**
**Madras Oregon 97741 (US)**

(74) Representative : **Hoijtink, Reinoud et al**
**OCTROOIBUREAU ARNOLD & SIEDSMA Sweelinck-plein 1**
**NL-2517 GK Den Haag (NL)**

## Description

The invention relates to a reciprocating floor type conveyor and a hydraulic assembly for moving said floor type conveyor as described in the preamble of claim 1, which is known from U.S.-A-4 144 963. This known construction of the hydraulic drive assembly has as a disadvantage that extremely long piston rods or extensions of piston rods are used. These long piston rods have a tendency to buckle in use because they are so long and slender. Another disadvantage of the known construction is that the assembly needs a relatively large space in the truck in which the conveyor is to be installed in order to fit the assembly.

The invention has as its object to obviate these disadvantages and to provide a hydraulic drive assembly which can easily be installed as a unit, is of a compact construction and does not make use of long piston rods.

According to the invention this is achieved by the characteristics as defined in the characterizing part of claim 1.

Other preferred features of the invention are described in the description of the preferred embodiment and are particularly pointed out in the appended claims.

## Brief Description of the Drawings

In the drawings, like element designations refer to like parts throughout, and

Figure 1 is a pictorial view of a truck that is equipped with a reciprocating floor conveyor constructed in accordance with the present invention, shown in the process of using the conveyor to discharge its load ;

Figure 2 is a top plan diagram of a conveyor which includes three floor members per group with each common floor member being identified by a common number, such conveyor being shown in a fully retracted position ;

Figure 3 is a view like Fig. 2, but showing all of the floor members being advanced in unison to convey a load in the direction indicated by arrows ;

Figure 4 is a view like Figs. 2 and 3, showing floor members 2 and 3 stationary while floor members 1 are being retracted ;

Figure 5 is a view like Figs. 2-4, but showing floor members 1 and 3 stationary while floor members 2 are being retracted ;

Figure 6 is a view like Figs. 2-5, but showing floor members 1 and 2 stationary and floor members 3 being retracted ;

Figure 7 is an enlarged scale fragmentary view of the region where a floor member guide beam crosses and is attached to a transverse floor support frame member, with a foreground portion of the floor member cut away for the purpose of showing a slide bearing provided at such location in side elevation, and showing a fragmentary portion of the transverse floor support frame member in section ;

Figure 8 is a cross-sectional view taken substantially along line 8-8 of Fig. 7 ;

Figure 9 is a cross-sectional view taken substantially along line 9-9 of Fig. 7 ;

Figure 10 is a sectional view taken substantially along line 10-10 of Fig. 8, showing components which are below the section line in top plan ;

Figure 11 is a top plan view of an embodiment of the drive assembly of the present invention ;

Figure 12 is a bottom plan view of the assembly shown by Fig. 11 ;

Figure 13 is an end elevational view of the drive assembly shown by Figs. 11 and 12, with a mid portion of a foreground side beam removed for clarity of illustration of the components behind such beam ;

Figure 14 is a fragmentary sectional view taken substantially along the line 14-14 of Fig. 11, showing a portion of one of the transverse drive beams resting on a bearing strip which is secured to the top of the side beam ;

Figure 15 is a longitudinal sectional view taken through one of the hydraulic drive units, substantially along line 15-15 of Fig. 11 ;

Figure 16 is an enlarged scale fragmentary view of the right-hand valve region which is shown in Fig. 15 ; and

Figure 17 is a fragmentary sectional view taken substantially along line 17-17 of Fig. 15, showing one of the clamp mechanisms used for securing the transverse drive beam to the cylinder.

## Best Mode For Carrying Out The Invention

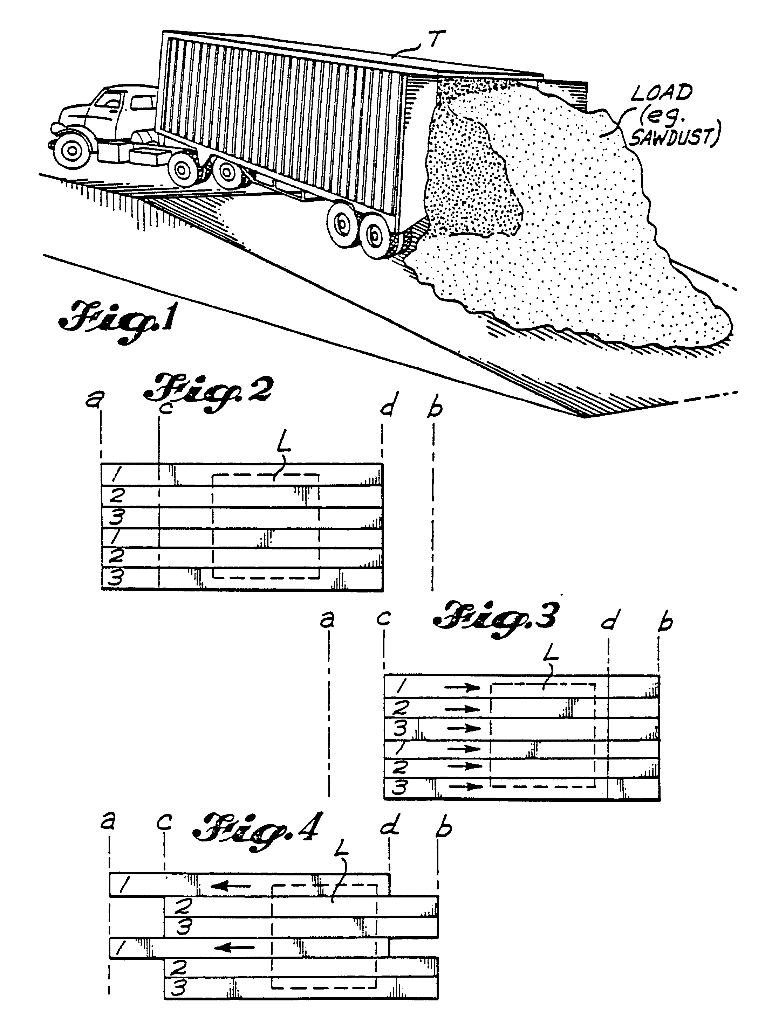

Figure 1 shows a load of sawdust or other bulk material being unloaded from a large truck T by use of a reciprocating floor conveyor within the truck T.

Figures 1-6 illustrate how the reciprocating floor conveyor works. These figures show two groups of floor members. Each group comprises three independent floor members designated 1, 2 and 3. The members « 1 » move together. The members « 2 » move together. And, the members « 3 » move together.

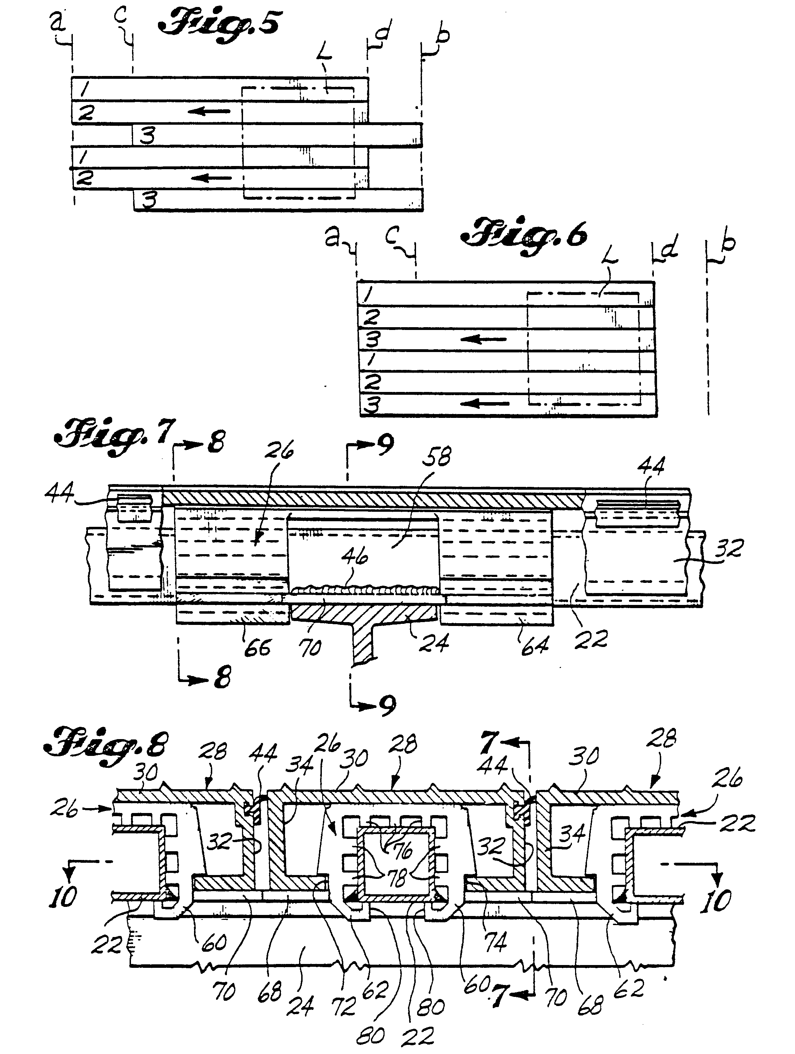

Figure 2 shows all of the floor members in a retracted position in which common ends are aligned at a start station a. A load L is shown centrally positioned on the floor. Fig. 3 shows all of the floor members being advanced together to move the load L forwardly and the opposite ends of the floor members to a fully advanced position b. Fig. 4 shows the group « 1 » floor members being retracted and the groups « 2 » and « 3 » floor members held stationary. The load does not move because the frictional forces exerted on it by the stationary floor members are larger than the frictional forces exerted on it by the retracting floor members « 1 ». Fig. 5 shows the next step in the sequence. The retracted floor members « 1 » and the still advanced floor members « 3 » are held stationary and the floor members « 2 » are retracted. Again, the load L does not move. Fig. 6 shows retracted floor members « 1 » and « 2 » stationary and floor members « 3 » being retracted. Again, the load L does not move. In this example, the load L has moved a distance equal to the endwise movement of the floor, viz. a-c or d-b.

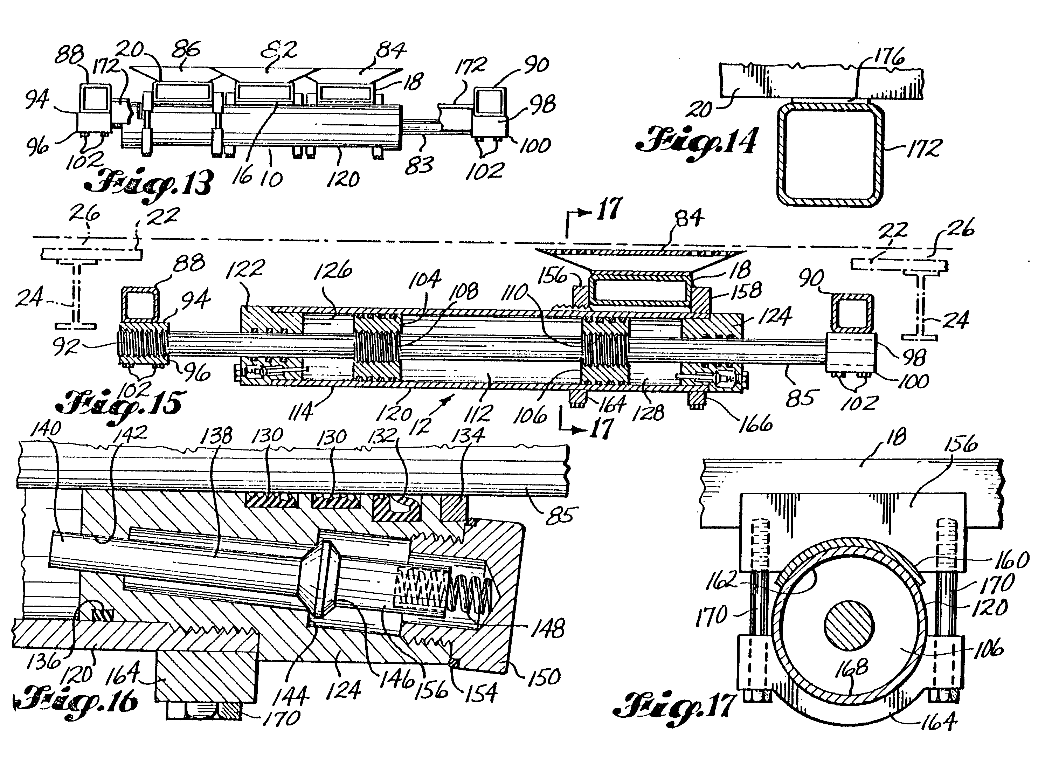

Referring now to Figs. 11-17, the drive mechanism which is illustrated is adapted to be installed within a space provided for it within a main support frame of a vehicle or a stationary installation. The drive mechanism comprises three hydraulic drive units 10, 12, 14. The drive units 10, 12, 14, function to reciprocate a like number of transverse drive beams 16, 18, 20. As best shown by Fig. 15, when the drive mechanism is installed, the transverse drive beams 16, 18, 20 are positioned to reciprocate within a space defined at its ends by the ends of two axially aligned groups of guide beams 22. In this respect, the relationship of the drive mechanism is essentially the same as what is shown in United States Patent No. 4 184 587. However, the unique construction of the drive mechanism of the present invention enables the drive mechanism to be installed in a much shorter axial space.

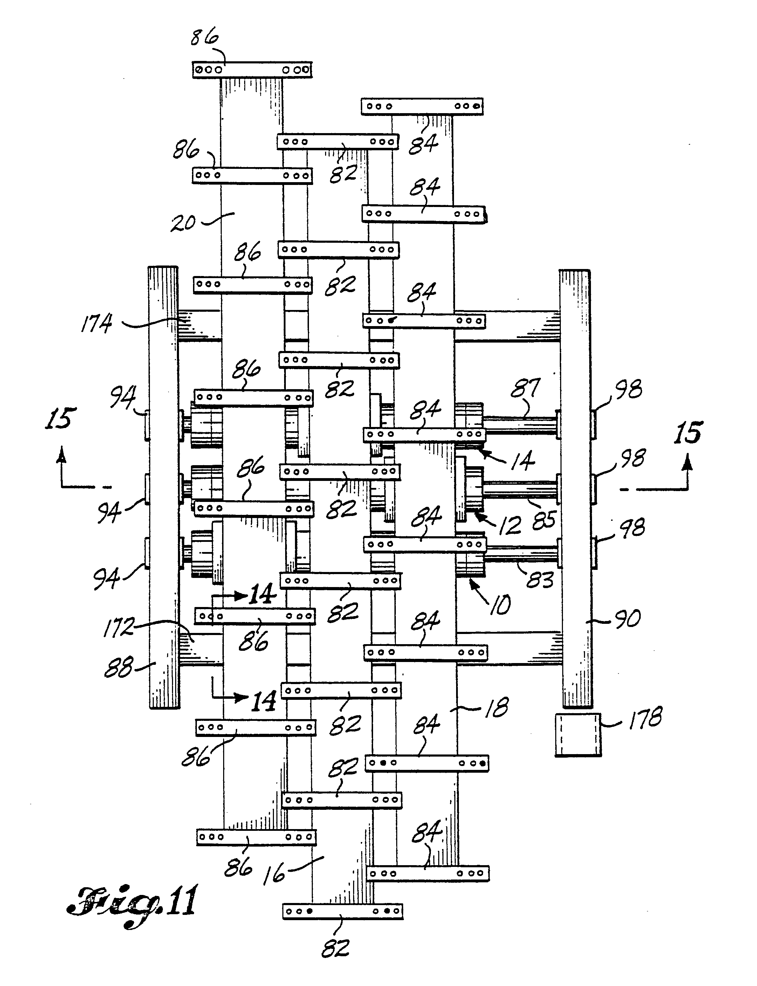

The main support frame for the installation comprises a plurality of transverse support beams. Two of these beams are shown in Fig. 15 and are designated 24. The guide beams 22 extend across upper surface portions of the transverse support beam 24. The guide beams 22 are connected to the support beam 24 by fillet welds on each side of the guide beams 22 (Fig. 9).

A plurality of connectors 82 are connected to and move with the transverse drive beam 16. A plurality of connectors 84 are connected to and move with the transverse drive beam 18. A plurality of connectors 86 are connected to and move with the drive beam 20. By way of example, the group « 1 » floor members may be connected to the connectors 82. The group « 2 » floor members may be connected to the connectors 84. The group « 3 » floor members may be connected to the connectors 86. Preferably, the connectors 82, 84, 86 are welded to the transverse drive beams 16, 18, 20. The floor members « 1 », « 2 », « 3 » are secured to the connectors 82, 84, 86 by means of bolts or other suitable fasteners which extend through openings in the floor members and connectors.

Aside from their connection to the connectors 16, 18, 20, the floor members « 1 », « 2 » and « 3 » are free to move. The guide beams 22 are provided to guide their movement and plastic slide bearings 26 are provided to facilitate movement.

Throughout the several figures of the drawing, some of the floor members are designated 28. Some of the guide beams are designated 22.

Some of the transverse support beams are designated 24. Some of the bearings are designated 26. Also, in Fig. 15, two of the locations of the plastic slide bearings are shown and are designated 26. It is to be understood that a plastic slide bearing is to be provided at each location where a longitudinal guide beam 22 crosses and is connected to a transverse support beam 24.

Referring to Fig. 9, each floor member 28 comprises a top panel 30, a pair of side panels 32, 34 which depend from the top panel 30 and a pair of inwardly directed bottom flanges 36, 38. A T-shaped groove is formed in the upper portion of each side panel 32 to receive the T-shaped locking portion 42 of a seal strip 44. A lip portion of the seal strip 44 makes contact with an upper outer side portion of the side panel 34 of the adjoining floor member 28.

As best shown by Figs. 9 and 10, the longitudinal guide beams 22 are relatively small in cross section in comparison with the cross section of the floor members 28. This creates no problem because forces are only carried at the location of the slide bearings 26. In a typical installation, thin wall steel tubing, of square cross section, having an outside dimension of about 2,54 cm × 2,54 cm (1″ × 1″) is preferred. Such tubing is used in combination with floor members which measure approximately 8,89 cm (3 1/2″) in width. An important factor in the installation is that the dimensions « x » are substantially large, e. g. about 0,952 cm (3/8 of an inch). This provides sufficient room on each side of the guide beams 22 for a very substantial, undressed fillet weld 46. This is quite important because a larger weld can be applied faster and with less care than a smaller weld and the strength of the connection is greater. A problem encountered with the use of a large dimension guide tube, such as disclosed in the aforementioned U.S. Patent No. 4 184 587 was that it greatly limited the room available at the sides of the guide tubes for welding them to the transverse support frame beams. Skillful welding was required and in many cases the weld had to be « dressed ». The resulting fillet was relatively small regardless of the quality of the weld and the connections were often weakened by the grinding or other dressing that was necessary.

The use of the small dimension guide tubes 22 and the particular slide bearing configuration 26 that is disclosed herein is what has made it possible for me to use larger, stronger fillet welds between the guide beams 22 and the support beams 24.

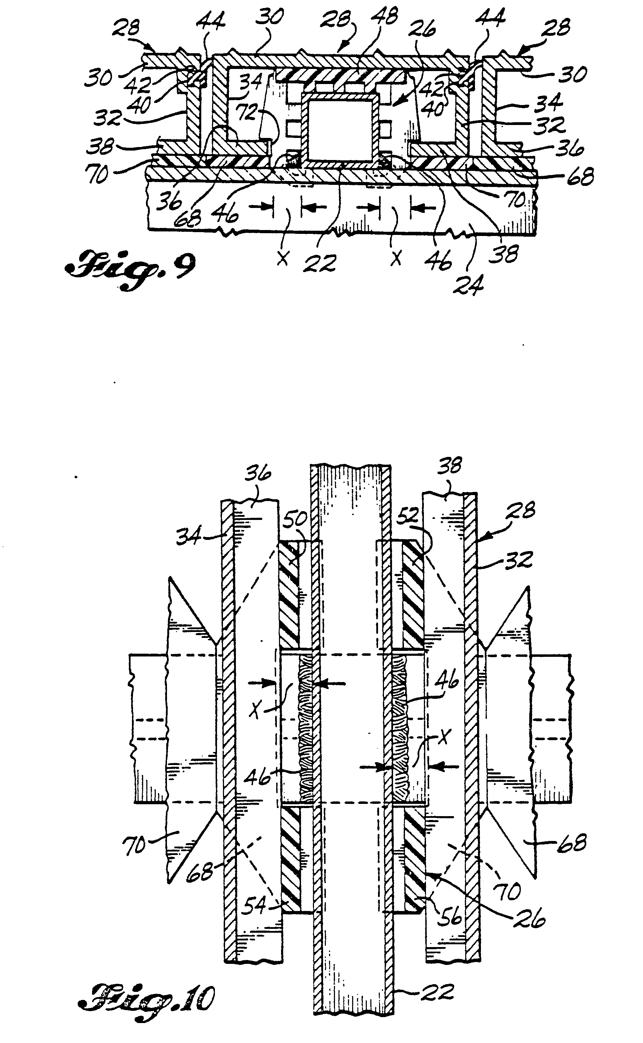

As best shown by Figs. 7-10, the plastic slide bearing 26 comprises a continuous top 48 which extends the full length of the bearing 26. Sidewall portions 50, 52, 54, 56 are provided only at the ends of the bearing 26. Sidewall portions 50, 54 are provided on one side of the bearing and are separated by a large dimension opening or window 58 (Fig. 7). A similar central opening or window is provided on the opposite side of the bearing, between sidewall portions 52, 56.

An inwardly directed lock flange 60, 62, 64, 66 extends laterally inwardly from each sidewall portion 50, 52, 54, 56.

The presence of the side openings or windows 58 would severely weaken the sidewall portions 50, 52, 54, 56, rendering the bearing 26 structurally inadequate, if it were not for the provision of a longitudinal wing 68, 70 on each side of the bearing 26. Each wing 68, 70 projects laterally outwardly from its side of the bearing 26, and has a bottom surface which rests on the top surface of the support beam 24. Each wing 68, 70 extends longitudinally of the bearing 26 and interconnects the two sidewalls 50, 54 or 52, 56 on its side of the bearing 26. Owing to the direction of its extent (it extends perpendicular to the sidewalls) it inherently stiffens and strengthens both of the sidewall portions to which it is connected. Further, and quite importantly, each wing 68, 70 includes an outer edge portion which makes abutting contact with the outer edge portion of the wing 68, 70 for the next bearing over on its side of its bearing 26 (Figs. 8-10). This abutting contact between the outer edges of the wings 68, 70 prevents the sidewall portions 50, 52, 54, 56 of the bearings 26 from spreading apart in response to any upwardly directed force on the floor member which might occur.

As clearly shown in Figs. 8 and 9, each sidewall portion 50, 52, 54, 56 includes a projecting shoulder which together with the wings 68, 70 on its side of the bearing 26 defines a generally square-shaped slot 72, 74. The inner edge portions of the bottom flanges 36, 38 are received within the slots 72, 74, and this is what holds the floor members 28 onto the bearings 26.

The use of a relatively small dimension guide tube 24, also makes it possible to thicken the wall portions of the bearings 26. This is particularly important in the region of the lock flanges 60, 62, 64, 66.

As shown by Figs. 8 and 9, the top panel 48 of each bearing 26 is formed to include a plurality of longitudinally extending internal strengthening ribs 76. The sidewall portions 50, 52, 54, 56 of the bearings 26 include longitudinally extending, internal strengthening ribs 78. The lock flanges 60, 62, 64, 66 are formed to first slope downwardly and inwardly, generally from where the sidewall portions 50, 52, 54, 56 join the wings 68, 70. Then, the lock flanges 60, 62, 64, 66 extend laterally inwardly and at their inner extremities include upwardly projecting, longitudinally extending strengthening ribs 80 (Fig. 8).

The portions of the top wall 48 between the strengthening ribs 78 is made to be thinner than the regions of the sidewall portions 50, 52, 54, 56 between the strengthening ribs 78. This is done so that the top panel will bend more easily than the sidewalls.

The bearings are installed by setting them down onto the top of the guide beam 22 and then spreading the sides apart a sufficient amount to allow a space between the lock flanges 60, 62, 64, 66 sufficiently large to allow passage of the guide beam 22. The bearings 26 are merely pushed downwardly until the lock flanges 60, 62, 64, 66 clear the bottom surface portions of the guide beam 22, where they emerge on opposite sides of the support beam 24. When this happens, the sidewall portions 50, 52, 54, 56 of the bearings 26 act like springs and snap into place (Fig. 8).

As shown by Fig. 7, the inner ends of the lock flanges 60, 62, 64, 66 act to contain the bearing 26 in position relative to the transverse beam 24.

As shown by Fig. 8, the bottom surface of the top panel 30 of each floor member 28 may rest on the upper surface of the top 48 of the bearing. Or, the bottom surfaces of the floor member flanges 36, 38 may rest on the upper surfaces of the wings 68, 70. In some installations, a little of both will occur. The presence of the wings 68, 70, which are bearing surfaces, assures that at no time will there be metal-to-metal contact between the floor members 28 and the support frame members 24.

The location of the inner edge portions of the floor member flanges 36, 38 within the bearing slots 72, 74 functions to add the stiffness of the floor members 28 to the load system. That is, any force tending to lift a bearing 26, will encounter the stiffness of the floor member 28, bracing the wings, the sidewall portions and the lock flanges of the bearings 26 against movement. The fact that the lock flanges 60, 62, 64, 66 are made relatively thick in size, and the presence of the sloping wall portions of the lock flanges 60, 62, 64, 66 sufficiently strengthen such lock flanges against breakage. However, of most importance is the fact that the guide beams 22 are connected to the transverse beams 24 by quite large and strong welds. This fact assures against the breakage of the joint and the movement of the guide tubes 22 which would impose upward forces on the bearings. The use of the large weld connections is only made possible by the use of bearings 26 constructed as shown.

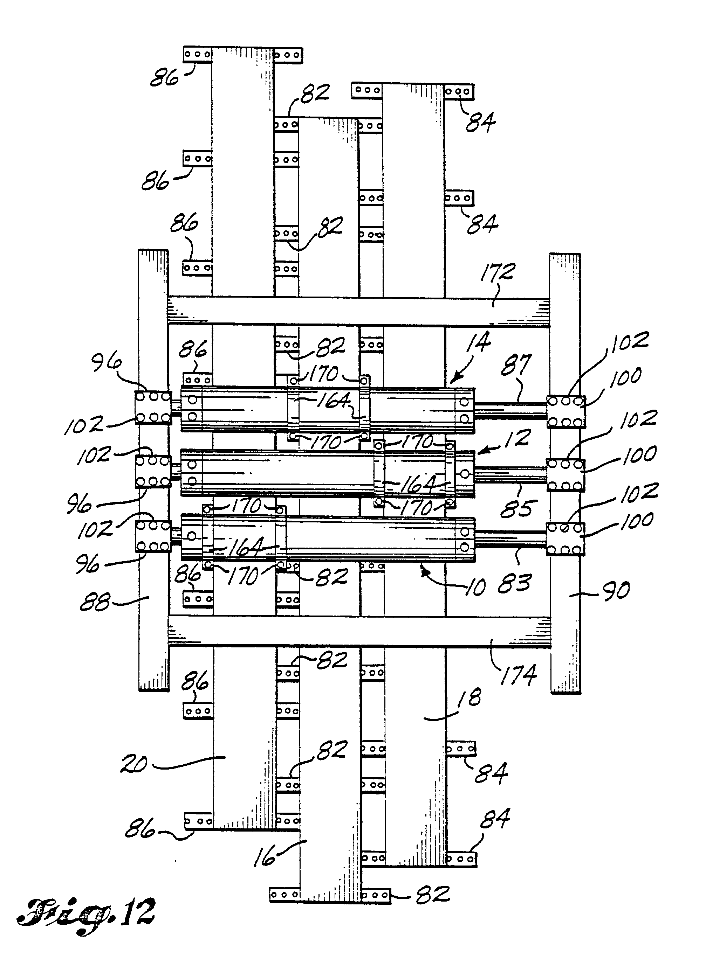

Referring again to Figs. 11 and 12, in the illustrated embodiment the drive units 10, 12, 14 are identical. Each comprises a piston rod 83, 85, 87 having opposite end mounting portions by which they are secured to a pair of transverse frame beams 88, 90.

The further details of the hydraulic units 10, 12, 14 will be described with reference to hydraulic unit 12 which is shown in section in Fig. 15. A pair of clamp blocks are provided at each end of each piston rod 83, 85, 87. Each piston rod 83, 85, 87 is preferably threaded or otherwise machined at one end 92 and the clamp blocks 94, 96 at that end have matching internal threads or machining so that they will grip the rod 83, 85, 87 and restrain it from movement in the axial direction. The opposite end portions of the rods 83, 85, 87 may be smooth and the clamp blocks 98, 100 at that end have semicylindrical clamp surfaces which grip such end portions of the rods 83, 85, 87.

The upper clamp blocks 94, 98 are welded to the transverse tubes 88, 90. The lower clamp blocks 96, 100 are detachably secured in place by bolts 102 which extend through openings in the clamp blocks 96, 100 and thread into threaded openings formed in the clamp blocks 94, 98.

Each piston rod 83, 85, 87 includes a piston portion intermediate its ends. In Fig. 15 the piston portion is shown in the form of a pair of spaced apart piston members 104, 106. Preferably, the piston rods 83, 85, 87 are threaded in the regions 108, 110 and the piston members 104, 106 are cast directly onto the threaded portions 108, 110. They are then machined to size. The threads or some similar interlock machining at 108, 110 results in the piston members 104, 106 being firmly secured in place on the guide shaft 16, 18, 20.

Each piston member 104, 106 is provided with peripheral grooves for receiving wear rings and seal rings.

The space 112 between piston members 104, 106 is nonfunctional. Thus, the piston members 104, 106 function as if they were a single member. A single long piston member could be substituted for the two piston members 104, 106 but this is not desirable because it would increase the weight of the drive unit. Or, a short piston could be used which is provided with an axial extension at each end for depressing a check valve operator that will hereinafter be described.

Each of the drive units 10, 12, 14 includes a traveling cylinder 114, 116, 118. Each cylinder 114, 116, 118 includes a cylindrical barrel portion 120 and a pair of end members 122, 124. The end members 122, 124 include reduced diameter inner end portions which are snuggly received within the ends of the barrel 120. The end members 122, 124 are thread connected to the end portions of the barrel 120.

For purposes of this discussion, the piston portion 104, 106 will be considered to be a single element.

Variable volume chambers 126, 128 are defined at the opposite ends of the piston portion, the fluid porting into and outfrom the chambers 126, 128 is formed in the end members 122, 124.

The hydraulic circuitry is not a part of the present invention and hence it is not disclosed. However, the hydraulic circuit is basically like the hydraulic circuit that is shown by Fig. 4 of the aforementioned United States Patent No. 4 143 760. The check valves that are shown in Fig. 4 of United States Patent No. 4 143 760 are built into the end members 122, 124.

Each end member 122, 124 is preferably grooved to receive a pair of wear rings 130, a seal 132 and a wiper 134. An additional seal 136 is provided between the inner end portion of the end member 122, 124 and the adjoining inner surface of the cylinder barrel 120.

Referring to Fig. 16, the check valve may include an elongated body 138 having an inner end portion 140 which projects through a bore 142. A shoulder formed at 144 defines a valve seat. A conical surface portion of a valve plug 146 is biased into engagement with the seat by means of a spring 148. Spring 148 is retained by a removable closure 150. An O-ring 154 is provided between the head of member 150 and an adjoining surface portion of the end member 122, 124. The inner end portion of the spring 148 fits into a socket formed in an end portion 156 of the valve member.

As should be evident, the spring 148 maintains the valve in a seated position except for those times when the piston portion has contacted end portion 140 and has moved the valve member to the right as pictured in Fig. 16.

Each cross frame member 16, 18, 20 is removably secured to a related one of the hydraulic drive units 10, 12, 14. In the illustrated embodiment this is done by clamps.

Referring to Figs. 15 and 17 in particular, a pair of upper clamp parts 156, 158 are welded or otherwise secured to each transverse drive beam 16, 18, 20 in a position over the barrel 120 of the associated drive unit 10, 12, 14. Preferably, a machined section 160 is welded to a peripheral portion of the barrel 120 in the vicinity of the clamp 156. Threads or other lock elements are provided on the outer surface of the member 160. The arcuate inner surface 162 of clamp member 156 is formed with interlocking machining so that when the clamp is secure its connection with the drive unit 10, 12, 14 will lock the transverse drive beam 16, 18, 20 to the barrel 120 of its drive unit 10, 12, 14 and will prevent movement between the two in the direction of applied force.

As best shown by Fig. 17, each clamp includes a removable lower portion 164, 166 which includes an arcuate inner surface 168 which matches the curvature of the cylinder barrel 120. Securement bolts 170 extend through openings in the removable clamp part 164 and thread into threaded sockets formed in the fixed clamp parts 156, 158.

The connection of the guide shafts to the members 88, 90 will serve to integrate the parts of the mechanism. It might also be desired to provide the assembly with a pair of longitudinal beams 172, 174 which are welded at their ends to the members 88, 90. Members 172, 176, and members 88, 90 may be lengths of square tubing, as shown by Figs. 13-15. If members 172, 174 are employed, strips of a suitable plastic bearing material is secured to the top portions of the members 172, 176, to provide load carrying supports for the transverse drive members 16, 18, 20.

The drive mechanism may be mounted between two beams in the manner disclosed in the aforementioned copending application Serial No. 346 863. Such manner of installation requires the use of tubular mounting members, one of which is shown in Fig. 11 and is designated 178. As disclosed in Serial No. 346 863, a tubular member like 176 is provided at each end of each member 88, 90. The length of members 88, 90 is slightly less than the lateral spacing between two main frame beams (not shown). The members 176 are installed on the end portions of members 88, 90 and are moved endwise. Then, the mechanism is positioned between the two main frame beams. Then, the members 178 are moved outwardly and at their outer ends are welded to the main frame beams. Then, they are welded at their inner ends to the members 88, 90. In some installations it is also desirable to add diagonal bracing.

The drive mechanism of the present invention is characterized by a relatively small number of members and a low weight. This is contributable to the fact that the guide rods and pistons are fixed, the cylinder portions of the drive units 10, 12, 14 are movable, and the transverse drive beams 16, 18, 20 are directly secured to the barrel portion of the movable cylinders.

It is contemplated that in other installations shorter cylinders may be used. For example, each cylinder may project only a small distance outwardly from each side of its transverse drive beam. In an arrangement of this type the cylinders would not be side-by-side but rather would be staggered in position. That is, one of the short cylinders would be centered relative to drive beam 16, a second would be centered to drive beam 18 and the third would be centered relative to drive beam 20. This could be accomplished by using piston rods which span the full distance between the frame members 88, 90, but on which the piston heads are staggered. Or, short piston rods could be used and the frame could be altered.

From the foregoing, various further modifications, component arrangements, and mode of utilization of the reciprocating floor conveyor of the invention will be apparent to those skilled in the art to which the invention is addressed, within the scope of the following claims.

## Claims

1. A reciprocating floor type conveyor, comprising : at least three sets of floor slat members (1, 2, 3) which are mounted adjacent to each other for longitudinal reciprocation ;

a plurality of transverse drive beams (16, 18, 20), one for each set of floor slat members, each transverse drive beam including means (82, 84, 86) for connecting it to its set of floor slat members ;

a plurality of reversible linear hydraulic drive units (10, 12, 14), one for each transverse drive beam and the set of floor slat members connected thereto, characterized by each said drive unit comprising an elongated piston rod (83, 85, 87) having two opposite end mounting portions, a piston portion (104, 106) fixed on a mid part of the piston rod, and a cylinder (114, 116, 118) mounted to reciprocate back and forth on said piston rod, said cylinder and said piston portion together defining two variable volume chambers (126, 128), one outwardly from each end of the piston portion ; said drive units (10, 12, 14) being positioned to place said cylinders (114, 116, 118) directly below the transverse drive beams (16, 18, 20) ;

means for connecting each cylinder to its transverse drive beam, the connection of each cylinder to its respective transverse drive beam occurring at different distances along the respective cylinders ;

and wherein in use said transverse drive beams (16, 18, 20) are moved by said drive units (10, 12, 14) back and forth within a space which is between the opposite end mounting portions of the piston rods.

2. A reciprocating floor type conveyor according to claim 1, including means (164) for detachably connecting each transverse drive beam (16, 18, 20) to its cylinder.

3. A reciprocating floor type conveyor according to claim 2, wherein the means for detachably connecting each transverse drive beam to its cylinder comprises an upper clamp member (156) attached to the transverse drive beam (18) having a lower portion (160) shaped to engage the cylinder, a lower clamp member (164) having an upper portion shaped to engage the cylinder, and removable connectors (170) for detachably securing the two clamp members together.

4. A reciprocating floor type conveyor according to claim 3, wherein the cylinder and at least one of the clamp members include interlocking portions (162, 120) which serve to prevent the cylinder from moving longitudinally relative to the clamp member.

5. A reciprocating floor type conveyor according to claim 1, further comprising a pair of transverse frame members (88, 90) associated with the opposite end mounting portions of the elongated piston rods, (83, 85, 87), and means (98, 100) for detachably securing the mounting portions of the piston rods (83, 85, 87) to said transverse frame members, so that said piston rods and said transverse frame members together form a support frame for the drive units.

6. A reciprocating floor type conveyor according to claim 5, further comprising at least two longitudinal frame members (172, 174) interconnected between the transverse frame members, outwardly on opposite sides of the plurality of drive units (10, 12, 14).

7. A reciprocating floor type conveyor according to claim 6, further including slide bearing means carried by the longitudinal frame members (172, 174), and wherein the transverse drive beams (16, 18, 20) make sliding contact with said slide bearing means.

8. A reciprocating floor type conveyor according to any one of claims 1-7, wherein each transverse frame member (88, 90) includes a projecting end portion at each of its ends, and said conveyor further includes a mounting member of tubular (176) form telescopically received on each said end portion, said mounting member being adapted to be welded at its outer end to a frame structure in an installation, and at its inner end to the transverse frame member.

## Patentansprüche

1. Hin- und hergehender Flurförderer, der wenigstens drei Gruppen von Flurplattengliedern (1, 2, 3) aufweist, die benachbart zueinander hin- und hergehend gelagert sind ;

mit mehreren querverlaufenden Antriebsträgern (16, 18, 20), und zwar jeweils einen für jede Gruppe von Flurplattengliedern, wobei jeder querverlaufende Antriebsträger Mittel (82, 84, 86) aufweist, um ihn an seiner Gruppe von Flurplattengliedern festzulegen ;

mit mehreren reversiblen linearen hydraulischen Antrieben (10, 12, 14), und zwar jeweils einen für jeden querverlaufenden Antriebsträger und die hiermit verbundenen Flurplattenglieder, dadurch gekennzeichnet, daß jede Antriebseinheit eine langgestreckte Kolbenstange (83, 85, 87) mit zwei entgegengesetzten Endlagerabschnitten aufweist, daß ein Kolbenabschnitt (104, 106) am mittleren Teil der Kolbenstange angeordnet ist und daß ein Zylinder (114, 116, 118) so montiert ist, daß er längs der Kolbenstange hin- und hergehend beweglich ist, wobei der Zylinder und der Kolbenabschnitt zusammen zwei Kammern (126, 128) variablen Volumens definieren, von denen eine außerhalb von jedem Ende des Kolbenabschnitts liegt ; daß die Antriebseinheiten (10, 12, 14) so angeordnet sind, daß die Zylinder (114, 116, 118) direkt unter den querverlaufenden Antriebsträgern (16, 18, 20) zu liegen kommen ;

daß Mittel vorgesehen sind, um jeden Zylinder an dem ihm zugeordneten querverlaufenden Antriebsträger festzulegen, wobei die Verbindung von jedem Zylinder mit dem jeweiligen querverlaufenden Antriebsträger über unterschiedliche Abstände längs der jeweiligen Zylinder erfolgt ;

und daß im Gebrauch die querverlaufenden Antriebsträger (16, 18, 20) durch die Antriebseinheiten (10, 12, 14) innerhalb des Raumes, der zwischen den gegenüberliegenden Endlagerabschnitten der Kolbenstangen verbleibt, hin- und herbewegt werden.

2. Hin- und hergehender Flurförderer nach Anspruch 1, bei welchem Mittel (164) vorgesehen sind, um jeden querverlaufenden Antriebsträger (16, 18, 20) lösbar mit seinem Zylinder zu verbinden.

3. Hin- und hergehender Flurförderer nach Anspruch 2, bei welchem die Mittel zur lösbaren Befestigung jedes querverlaufenden Antriebsträgers mit seinem Zylinder eine obere Klemme (156) aufweist, die am querverlaufenden Antriebsträger (18) angeordnet ist, wobei ein unterer Abschnitt (160) so gestaltet ist, daß er den Zylinder erfaßt, und wobei ein unterer Klemmkörper (164) mit einem oberen Abschnitt ausgestattet ist, der so gestaltet ist, daß er an dem Zylinder angreift, und wobei lösbare Verbinder (170) die beiden Klemmkörper lösbar miteinander verbinden.

4. Hin- und hergehender Flurförderer nach Anspruch 3, bei welchem der Zylinder und wenigstens einer der Klemmkörper Verriegelungsteile (162, 120) aufweisen, die verhindern, daß der Zylinder sich in Längsrichtung relativ zu dem Klemmkörper bewegt.

5. Hin- und hergehender Flurförderer nach Anspruch 1, welcher außerdem zwei querverlaufende Rahmenteile (88, 90) aufweist, die den gegenüberliegenden Endlagerabschnitten der Kolbenstangen (83, 85, 87) zugeordnet sind, wobei Mittel (98, 100) die Lagerabschnitte der Kolbenstangen (83, 85, 87) lösbar an den Querrahmenabschnitten festlegen, so daß die Kolbenstangen und die querverlaufenden Rahmenteile zusammen einen Trägerrahmen für die Antriebseinheiten bilden.

6. Hin- und hergehender Flurförderer nach Anspruch 5, welcher außerdem wenigstens zwei längsverlaufende Rahmenteile (172, 174) aufweist, die zwischen den querverlaufenden Rahmenteilen liegen, und zwar außerhalb der gegenüberliegenden Seiten der Antriebseinheiten (10, 12, 14).

7. Hin- und hergehender Flurförderer nach Anspruch 6, welcher außerdem Gleitlager aufweist, die von den Längsrahmen (172, 174) getragen werden, und bei welchen die querverlaufenden Antriebsträger (16, 18, 20) in Gleitberührung mit den Lagern stehen.

8. Hin- und hergehender Flurförderer nach einem der Ansprüche 1 bis 7, bei welchem jeder querverlaufende Rahmenteil (88, 90) einen vorstehenden Endabschnitt an jedem Ende aufweist und der Förderer einen rohrförmigen (176) Lagerkörper aufweist, der teleskopartig in einen Endabschnitt einsteht, und daß der Lagerkörper an seinem äußeren Ende mit dem Rahmenaufbau und mit seinem inneren Ende an dem querverlaufenden Rahmenteil verschweißt ist.

**Revendications**

1. Transporteur du type à plancher à mouvement alternatif, comprenant :

au moins trois ensembles de plancher (1, 2, 3) qui sont montés adjacents les uns aux autres pour décrire un mouvement alternatif longitudinal ;

plusieurs poutres d'entraînement transversales (16, 18, 20), une pour chaque ensemble d'éléments de plancher, chaque poutre d'entraînement transversale comprenant des moyens (82, 84, 86) servant à l'assembler à son ensemble d'éléments de plancher ;

plusieurs unités d'entraînement hydraulique linéaires réversibles (10, 12, 14), une pour chaque poutre d'entraînement transversale et pour l'ensemble d'éléments de plancher qui y sont assemblés, caractérisé en ce que chaque unité d'entraînement comprend une tige de piston de forme allongée (83, 85, 87) ayant deux parties de montage d'extrémités opposées, une partie de piston (104, 106) fixée sur une partie centrale de la tige de piston, et un cylindre (114, 116, 118) monté pour se déplacer en mouvement alternatif sur ladite tige de piston, le cylindre et la partie de piston définissant ensemble deux chambres à volume variable (126, 218), une à l'extérieur de chaque extrémité de la partie de piston ; les unités d'entraînement (10, 12, 14) étant positionnées pour placer les cylindres (114, 116, 118) directement au-dessous des poutres d'entraînement transversales (16, 18, 20) ;

des moyens destinés à assembler chaque cylindre à sa poutre d'entraînement transversale respective, l'assemblage entre chaque cylindre et sa poutre d'entraînement transversale respective étant exécuté à des distances différentes le long des différents cylindres ;

et dans lequel, en utilisation, les poutres d'entraînement transversales (16, 18, 20) sont déplacées vers l'avant et vers l'arrière par les unités d'entraînement (10, 12, 14) dans un espace qui se trouve entre les parties de montage d'extrémités opposées des tiges de pistons.

2. Transporteur du type à plancher à mouvement alternatif selon la revendication 1, comprenant des moyens (164) permettant de fixer chaque poutre d'entraînement transversale (16, 18, 20) à son cylindre de façon démontable.

3. Transporteur du type à plancher à mouvement alternatif selon la revendication 2, dans lequel les moyens servant à assembler chaque poutre d'entraînement transversale à son cylindre de façon démontable comprend un élément de collier supérieur (156) fixé à la poutre d'entraînement transversale (18), et qui comprend une partie inférieure (160) conformée pour s'appuyer sur le cylindre, un élément de collier inférieur (164) possédant une partie supérieure conformée pour entrer en contact avec le cylindre, et des organes d'assemblage amovibles (170) destinés à fixer les deux éléments de collier l'un à l'autre de façon séparable.

4. Transporteur du type à plancher à mouvement alternatif selon la revendication 3, dans lequel le cylindre et au moins l'un des éléments de collier comprennent des parties de verrouillage (162, 120) réciproque qui servent à empêcher le cylindre de se déplacer longitudinalement par rapport à l'élément de collier.

5. Transporteur du type à plancher à mouvement alternatif selon la revendication 1, comprenant en outre une paire d'éléments transversaux du châssis (88, 90) associés aux parties de montage d'extrémités opposées des tiges de piston de forme allongée (83, 85, 87) et des éléments (98, 100) servant à fixer les parties de montage des tiges de piston (83, 85, 87) aux éléments transversaux du châssis de façon séparable de manière que les tiges de piston et les éléments transversaux du châssis forment ensemble un châssis de support pour les unités d'entraînement.

6. Transporteur du type à plancher à mouvement alternatif selon la revendication 5, comprenant en outre au moins deux éléments longitudinaux (172, 174) du châssis qui sont montés entre les éléments transversaux du châssis, à l'extérieur et de part et d'autre des unités d'entraînement (10, 12, 14).

7. Transporteur du type à plancher à mouvement alternatif selon la revendication 6, comprenant en outre des moyens d'appui de glissement, portés par les éléments longitudinaux (172, 174) du châssis et dans lequel les poutres d'entraînement transversales (16, 18, 20) sont en contact glissant avec lesdits moyens d'appui de glissement.

8. Transporteur du type à plancher à mouvement alternatif selon l'une quelconque des revendications 1 à 7, dans lequel chaque élément transversal (88, 90) du châssis comprend une partie d'extrémité saillante à chacune de ses extrémités et ledit transporteur comprend en outre un élément de montage de forme tubulaire (176) monté télescopiquement sur chacune desdites parties d'extrémités, ledit élément de montage étant adapté pour être soudé à une structure de châssis à son extrémité extérieure dans une installation, et à un élément transversal du bâti à son extrémité intérieure.

**Fig.1**

LOAD
(eg.
SAWDUST)

T

**Fig.2**

L

**Fig.3**

L

**Fig.4**

L

*Fig.5*

*Fig.6*

*Fig.7*

*Fig.8*

*Fig. 9*

*Fig. 10*

Fig.11

Fig.12

Fig.13

Fig.14

Fig.15

Fig.16

Fig.17

0 138 971